# EUROPÄISCHE PATENTSCHRIFT

(11) **EP 2 230 112 B1**
(45) Veröffentlichungstag und Bekanntmachung des Hinweises auf die Patenterteilung: **16.05.2012**
(21) Anmeldenummer: 09290188.3
(22) Anmeldetag: 16.03.2009
(51) Int. Cl.: B60H 1/22

(54) **Kraftfahrzeugklimaanlage**
Automotive air conditioning system
Système de climatisation pour véhicules

(43) Veröffentlichungstag der Anmeldung: 22.09.2010
(73) Patentinhaber: Behr GmbH & Co. KG, 70469 Stuttgart (DE); Behr France Rouffach SAS, 68250 Rouffach (FR)
(72) Erfinder: Strauss, Thomas, 73274 Notzingen (DE); Englert, Peter, 74177 Bad Friedrichshall (DE); Kohl, Michael, 74321 Bietigheim (DE); Lochmahr, Karl, 71665 Vaihingen/Enz (DE); Bauer, Marc, 68440 Habsheim (FR); Clauss, Thierry, 67400 Illkirch-Graffenstaden (FR); Isermeyer, Tobias, 74245 Löwenstein (DE)
(74) Vertreter: Grauel, Andreas

(56) Entgegenhaltungen:
- WO-A-2007/129608
- DE-A1- 19 808 571
- DE-A1-102004 027 687
- US-A- 3 619 555

## Beschreibung

Die Erfindung betrifft eine Kraftfahrzeugklimaanlage gemäß dem Oberbegriff des Anspruches 1

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst elektrische Widerstandsheizelemente, insbesondere PTC-Elemente (PTC: Positive Temperature Coefficient), wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird.

In zunehmenden Maße werden Kraftfahrzeuge hergestellt, welche über einen ausschließlichen elektrischen Antrieb oder über einen Hybridantrieb verfügen. Kraftfahrzeugklimaanlagen für diese Kraftfahrzeuge verfügen im Allgemeinen nicht mehr über einen Wärmeaustauscher zum Erwärmen der Luft, der von Kühlflüssigkeit durchströmt wird. Die gesamte Heizleistung der Kraftfahrzeugklimaanlage muss deshalb von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 600 Volt anstelle von Niederspannung mit 12 Volt, zu betreiben. Hochspannung in einer Kraftfahrzeugklimaanlage stellt jedoch ein Sicherheitsproblem dar, weil beilspielsweise durch eine menschliche Berührung von unter Hochspannung stehenden Teilen dem Menschen von der Hochspannung gesundheitlicher Schaden zugefügt werden kann.

In nachteiliger Weise ist eine aufwendige elektrische Isolierung der elektrischen Heizeinrichtung erforderlich, weil die elektrische Heizeinrichtung mit Hochspannung betrieben wird. Die PTC-Elemente sind somit in aufwendiger und in der Herstellung teurer Weise, z. B. mit Isolierplatten, zu isolieren. Dabei weist im Allgemeinen die elektrischen Isolierung, z. B. die Isolierplatten, nur eine geringe Wärmeleitfähigkeit auf, so dass die von dem PTC-Element erzeugte Wärme nur zeitlich verzögert oder schlecht an die zu erwärmende Luft übertragen wird.

Aus der US 3 619 555 ist eine Infrarot-Hilfsheizeinrichtung für den Innenraum von Kraftfahrzeugen bekannt. Die Infrarot-Hilfsheizeinrichtung wird unterhalb der Armaturentafel des Kraftfahrzeuges befestigt. Innerhalb eines Gehäuses ist ein Drahtwiderstandselement angeordnet, welches Infratortstrahlung emittieren kann. Auf diese Weise kann der Innenraum mit Hilfe der Infrarot-Hilfseinrichtung erwärmt werden.

Die DE 198 08 571 A1 zeigt eine Zusatzheizeinrichtung für ein Kraftfahrzeug mit einem Infrarotstrahler, der im Fahrzeuginnenraum des Kraftfahrzeuges eingebaut ist. Der Infrarotstrahler wird dabei durch einen gezielten Luftstrom gekühlt. Aufgrund der Kühlung des innerhalb eines Gehäuses angeordneten Infrarotstrahlers erwärmt sich das Gehäuse nicht auf hohe Temperaturen.

WO 2007/129608 offenbart eine Zusatzheizeinrichtung nach dem Oberbegriff des Anspruchs 1.

Die Aufgabe der vorliegenden Erfindung besteht deshalb darin, eine Kraftfahrzeugklimaanlage mit einer elektrischen Heizeinrichtung und ein Verfahren zum Erwärmen von Luft in einer Kraftfahrzeugklimaanlage zur Verfügung zu stellen, bei dem die elektrische Heizeinrichtung mit elektrischen Strom unter Hochspannung, z. B. mehr als 50 V, betrieben wird und die Kraftfahrzeugklimaanlage gut elektrisch isoliert ist ohne Gefährdung für die Umwelt, insbesondere Menschen, sowie eine gute und schnelle Wärmeübertragung von der elektrischen Heizeinrichtung auf die Luft gewährleistet ist. Die Kraftfahrzeugklimaanlage soll in der Herstellung preiswert sein zuverlässig im Betrieb arbeiten.

Diese Aufgabe wird gelöst mit einer Kraftfahrzeugklimaanlage, umfassend ein Gehäuse, vorzugsweise ein Gebläse, einen Kältemittelverdampfer zum Kühlen einer einem Fahrzeuginnenraum zuzuführenden Luft, eine elektrische Heizeinrichtung zum Erwärmen der dem Fahrzeuginnenraum zuzuführenden Luft, wobei die elektrische Heizeinrichtung eine Vorrichtung zur Emittierung oder Erzeugung einer elektromagnetischen Strahlung umfasst, die von der Vorrichtung emittierte oder erzeugte elektromagnetische Strahlung als Wärmestrahlung auf oder zu einem Strahlungsabsorbierungsmittel, z. B. einen Körper und/oder einer Beschichtung vorzugsweise auf dem Körper und/oder einen Feststoff, z. B. ein Pulver oder ein Granulat, und/oder eine Flüssigkeit, z. B. Wasser oder Öl, adsorbierbar oder übertragbar ist und von dem mittels der elektromagnetischen Strahlung erwärmten Strahlungsabsorbierungsmittel, z. B. Körper und/oder Beschichtung und/oder Feststoff und/oder Flüssigkeit, die Luft mittelbar oder unmittelbar erwärmbar ist. Die Wärmeenergie wird somit von der elektrischen Heizeinrichtung auf die zu erwärmende Luft, welche durch das Gehäuse der Kraftfahrzeugklimaanlage geleitet wird, mittels elektromagnetischer Strahlung erwärmt. Dadurch ist eine aufwendige elektrische Isolierung der elektrischen Heizeinrichtung, beispielsweise gegenüber Wellrippen, nicht erforderlich, weil ein mittelbarer oder unmittelbarer Kontakt zwischen den Wellrippen und der elektrischen Heizeinrichtung nicht oder nur in einem Abschnitt erforderlich ist, welcher leicht elektrisch isoliert werden kann, weil keine Wärme in diesem Abschnitt zu übertragen ist.

In einer weiteren Ausgestaltung weist die Vorrichtung einen Abstand, z. B. wenigstens 0,1 mm, vorzugsweise wenigstens 1 mm oder 2 mm oder 1 cm oder 2 cm, zu dem Strahlungsabsorbierungsmittel auf und zwischen der Vorrichtung und dem Strahlungsabsorbierungsmittel bildet sich ein Raum oder Hohlraum aus, durch den die elektromagnetische Strahlung leitbar ist oder geleitet wird. In dem Raum oder Hohlraum befindet sich im Allgemeinen Luft, die nicht durch die Kraftfahrzeugklimaanlage geleitet wird.

Insbesondere ist wenigstens 10 % oder 20 %, vorzugsweise wenigstens 30 % oder 50 % oder 60 %, insbesondere wenigstens 80 % oder 90 % oder 95 % oder 99 %, der von der elektrischen Heizeinrichtung zur Verfügung gestellte Wärmeenergie elektromagnetische Strahlung oder Wärmestrahlung.

In einer weiteren Ausgestaltung ist die elektromagnetische Strahlung Infrarotstrahlung, vorzugsweise in einem Bereich zwischen 780 nm und 1 mm. Insbesondere handelt es sich bei der Infrarotstrahlung um nahes Infrarot (NIR) als kurzweilige Infrarotstrahlung, die sich direkt an den sichtbaren (roten) Bereich anschließt, welche eine Wellenlänge zwischen 780 nm bis 3000 nm aufweist.

Insbesondere sind wenigstens 10 oder 20 %, vorzugsweise wenigstens 30 % oder 50 % oder 60 %, insbesondere wenigstens 80 % oder 90 % oder 95 % oder 99 % der von der Vorrichtung emittierten bzw. zur Verfügung gestellten elektromagnetischen Strahlung Infrarotstrahlung und/oder nahe Infrarotstrahlung (NIR).

In einer weiteren Ausgestaltung sind die von der Vorrichtung zur Verfügung gestellten elektromagnetischen Strahlen bzw. die emittierte elektromagnetische Strahlen Mikrowellen in einer Wellenlänge zwischen 1 m und 1 mm und/oder sichtbares Licht mit einer Wellenlänge zwischen 380 nm und 750 nm.

Insbesondere sind wenigstens 10 oder 20 %, vorzugsweise wenigstens 30 % oder 50 % oder 60 %, insbesondere wenigstens 80 % oder 90 % oder 95 % oder 99 % der von der Vorrichtung emittierten elektromagnetischen Strahlen Mikrowellen und/oder sichtbares Licht.

In einer weiteren Ausgestaltung weist der Körper wenigstens eine Wandung auf und die wenigstens eine Wandung schließt einen Hohlraum ein.

In einer ergänzenden Ausführungsform umfasst der Körper ein Rohr mit der wenigstens einen Wandung und das Rohr schließt den Hohlraum ein.

Vorzugsweise weist die wenigstens eine Wandung des Körpers an einer zu dem Hohlraum gerichteten Seite eine Beschichtung zur Absorbierung der von der Vorrichtung emittierten elektromagnetischen Strahlung auf, vorzugsweise sind wenigstens 50% oder 80%, insbesondere wenigstens 90% oder 95 % oder 99%, der elektromagnetischen Strahlung von der Beschichtung aborbierbar.

In einer Variante umfasst die Beschichtung eine Metall-Sauerstoff-Verbindung, z. B. ein Metalloxid, und/oder ein Metall. Die Metall-Sauerstoff-Verbindung kann auch weitere chemische Elemente oder Verbindungen, z. B. nicht-metallische oder nicht Sauerstoff aufweisende Elemente oder Verbindungen, enthalten.

Zweckmäßig ist das Metall ein Element aus der Titangruppe, insbesondere Titan, und/oder die Beschichtung umfasst eine Titan-Sauerstoff-Verbindung und/oder die Beschichtung umfasst Titanoxidnitrid und Titan.

In einer weiteren Ausgestaltung ist die Beschichtung an dem Körper, insbesondere Rohr, mittels eines Nocolok-Lötverfahrens und/oder mittels eines Hartlötverfahrens hergestellt.

In einer weiteren Ausgestaltung besteht der Körper und/oder die Wandung des Körpers wenigstens teilweise aus einem offenporigen Aluminiumschaum und/oder aus einem Metallgewebe z. B. aus Aluminium oder Eisen, und/oder aus einem Gestrick, insbesondere aus Metall, z. B. Aluminium oder Eisen.

In einer weiteren Ausgestaltung ist die Beschichtung in situ, insbesondere mittels des Nocolok-Lötverfahrens, an der Wandung des Körpers oder an dem Körper hergestellt.

In einer weiteren Ausgestaltung weist die Beschichtung eine nanoskalige anorganische, vorzugsweise schwarze, Oberfläche auf.

In einer Variante ist der Körper, insbesondere das Rohr, dahingehend hergestellt, dass auf die Oberfläche des Körpers, welche die elektromagnetische Strahlung absorbieren soll, eine Flüssigkeit oder ein Gel oder ein Feststoff, insbesondere eine Blackbraze-Suspension, aufgebracht und beschichtet wird, anschließend der Körper in einen Lötofen eingebracht wird, so dass sich aus der Flüssigkeit oder dem Gel, insbesondere der Blackbraze-Suspension, eine nanoskalige anorganische schwarze Oberfläche bildet, d. h. die Beschichtung eine nanoskalige anorganische schwarze Oberfläche aufweist. Dadurch kann in vorteilhafter Weise bei der Herstellung der elektrischen Heizeinrichtung mit Wellrippen auf das aus dem Stand der Technik bekannte Verfahren zur Verbindung der Wellrippen mit dem Körper im Lötofen zurückgegriffen werden und dabei gleichzeitig auch eine entsprechende Beschichtung an der Innenseite des Körpers erzeugt werden, welche in der Lage ist, die von der Vorrichtung emittierte elektromagnetische Strahlung sehr gut zu absorbieren.

Die Vorrichtung ist eine Quarzrohr-Lampe.

Insbesondere ist die Vorrichtung mit Hochspannung, z. B. wenigstens 50 V oder 100 V oder 200 V oder 300 V, oder bis zu 600 V betreibbar.

In einer weiteren Ausführungsform ist von der Vorrichtung elektromagnetische Strahlung im Infrarotbereich erzeugbar, vorzugsweise wenigstens 10 % oder 20%, insbesondere wenigstens 30% oder 50% oder 60%, ganz insbesondere wenigstens 80% oder 90% oder 95% oder 99% der erzeugten elektromagnetischen Strahlung ist im Infrarotbereich.

Insbesondere sind an dem Körper außenseitig Wellrippen angeordnet, um die Wärme von den Wellrippen auf die zu erwärmende Luft zu übertragen und/oder von der Kraftfahrzeugklimaanlage ist ein in dieser Schutzrechtsanmeldung beschriebenes Verfahren zum Erwärmen von Luft in der Kraftfahrzeugklimaanlage ausführbar.

In einer weiteren Ausgestaltung sind innerhalb des Gehäuses der Kraftfahrzeugklimaanlage der Kältemittelverdampfer und die elektrische Heizeinrichtung angeordnet.

In einer weiteren Ausgestaltung weist die Kraftfahrzeugklimaanlage keinen Wärmeübertrager oder Wärmeaustauscher auf, welcher von einem Kühlmittel durchflossen wird zur Erwärmung der durch die Kraftfahrzeugklimaanlage geleiteten Luft.

In einer weiteren Ausgestaltung weist die Kraftfahrzeugklimaanlage wenigstens einen Kanal zum Durchleiten von Luft auf.

In einer Variante sind der Kältemittelverdampfer und/oder die elektrische Heizeinrichtung innerhalb des wenigstens einen Kanales angeordnet.

In einer ergänzenden Ausgestaltung weist die Kraftfahrzeugklimaanlage wenigstens eine Luftleiteinrichtung, z. B. wenigstens eine Luftklappe und/oder wenigstens einen Schirm und/oder wenigstens ein Rollband, auf, mittels der oder dienen die durch den wenigstens einen Kanal leitbare Luftmenge steuerbar ist.

Insbesondere besteht das Gehäuse der Kraftfahrzeugklimaanlage wenigstens teilweise aus Kunststoff.

Zweckmäßig ist der wenigstens eine Kanal zum Durchleiten von Luft von einer Wandung des Gehäuses begrenzt

Erfindungsgemäßes Verfahren zum Erwärmen von Luft in einer Kraftfahrzeugklimaanlage, insbesondere einer in dieser Schutzrechtsanmeldung beschriebenen Kraftfahrzeugklimaanlage, mit den Schritten: Leiten von elektrischem Strom durch eine elektrische Heizeinrichtung, Leiten von Luft durch die Kraftfahrzeugklimaanlage, Erzeugen von Wärmeenergie mittels der elektrischen Heizeinrichtung, indem die elektrische Energie in Wärmeenergie umgewandelt wird, Übertragen der Wärmeenergie auf die zu erwärmende Luft, welche durch die Kraftfahrzeugklimaanlage geleitet wird, so dass sich die Luft erwärmt, wobei von der elektrischen Heizeinrichtung elektromagnetische Strahlung erzeugt wird und mittels der elektromagnetischen Strahlung die durch die Kraftfahrzeugklimaanlage geleitete Luft erwärmt wird.

In einer weiteren Ausgestaltung werden wenigstens 10 % oder 20 %, vorzugsweise wenigstens 30 % oder 50 % oder 60 %, insbesondere wenigstens 80 % oder 90 % oder 95 % oder 99 %, der von der elektrischen Heizeinrichtung erzeugten Wärmeenergie mittels von einer Vorrichtung der elektrischen Heizeinrichtung emittierten elektromagnetischen Strahlung erzeugt, insbesondere indem die elektromagnetische Strahlung in Wärme oder Wärme-energie umgewandelt wird.

In einer weiteren Ausgestaltung wird die elektromagnetische Strahlung als Infrarotstrahlung, vorzugsweise in einem Bereich zwischen 780 nm und 1 mm emittiert. Insbesondere handelt es sich bei der Infrarotstrahlung um nahes Infrarot (NIR) als kurzwellige Infrarotstrahlung, die sich direkt an den sichtbaren (roten) Bereich anschließt, welche eine Wellenlänge zwischen 780 nm bis 3000 nm aufweist.

Insbesondere werden wenigstens 10 oder 20 %, vorzugsweise wenigstens 30 % oder 50 % oder 60 %, insbesondere wenigstens 80 % oder 90 % oder 95 % oder 99 % der von der Vorrichtung emittierten bzw. zur Verfügung gestellten elektromagnetischen Strahlung als Infrarotstrahlung und/oder nahe Infrarotstrahlung (NIR) emittiert.

In einer weiteren Ausgestaltung werden die von der Vorrichtung zur Verfügung gestellten elektromagnetischen Strahlen bzw. die emittierte elektromagnetische Strahlen als Mikrowellen in einer Wellenlänge zwischen 1 m und 1 mm und/oder als sichtbares Licht mit einer Wellenlänge zwischen 380 nm und 750 nm emittiert.

Insbesondere werden wenigstens 10 oder 20 %, vorzugsweise wenigstens 30 % oder 50 % oder 60 %, insbesondere wenigstens 80 % oder 90 % oder 95% oder 99 % der von der Vorrichtung emittierten elektromagnetischen Strahlen als Mikrowellen oder als sichtbares Licht emittiert.

In einer ergänzenden Variante wird die elektromagnetische Strahlung von einem Strahlungsabsorbierungsmittel, z. B. einem Körper und/oder einer Beschichtung insbesondere auf dem Körper und/oder einem Feststoff und/oder einer Flüssigkeit absorbiert, so dass sich das Strahlungsabsorbierungsmittel, z. B. der Körper und/oder die Beschichtung und/oder Feststoff und/oder die Flüssigkeit erwärmt. Die Beschichtung ist vorzugsweise Teil des Körpers.

In einer weiteren Variante wird von dem Strahlungsabsorbierungsmittel, z. B. Körper und/oder Beschichtung und/oder Feststoff und/oder der Flüssigkeit die Wärme auf die zu erwärmende Luft mittelbar oder unmittelbar, insbesondere mittels Wärmeleitung und/oder Konvention, übertragen.

In einer weiteren Ausgestaltung ist Strahlungsabsorbierungsmittel, z. B. der Körper und/oder die Beschichtung und/oder der Feststoff und/oder die Flüssigkeit mit Wellrippen wärmeleitend verbunden, so dass die Wärme von dem Strahlungsabsorbierungsmittel zu den Wellrippen geleitet wird und/oder die zu erwärmende Luft umströmt das Strahlungsabsorbierungsmittel und/oder die Wellrippen.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage und
- Fig. 2: eine schematisierten Längsschnitt einer elektrischen Heizeinrichtung der Kraftfahrzeugklimaanlage gemäß Fig. 1.

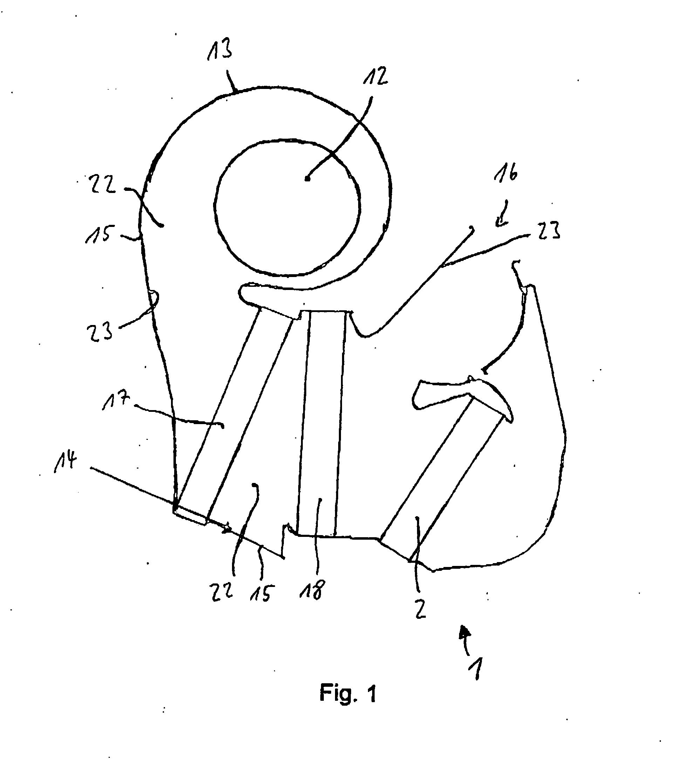

Fig. 1 zeigt eine Kraftfahrzeugklimaanlage 1. In einem ein- oder mehrteiligen Gehäuse 13 mit einer Bodenwandung 14 und einem Austrittsabschnitt 16 ist ein Gebläse 12, ein Filter 17, ein Kältemittelverdampfer 18 und ein Wärmeübertrager als eine elektrische Heizeinrichtung 2 angeordnet. Das Gehäuse 13 bildet somit einen Kanal 22 zum Durchleiten der Luft. Gehäusewandungen 15 des Klimaanlagengehäuses 13 weisen an der Innenseite eine Oberfläche 23 auf, welche den Kanal 22 begrenzen. Die Luft für den Innenraum eines Kraftfahrzeuges wird mittels des Gebläses 12 durch den Filter 17, den Kältemittelverdampfer 18 sowie den Wärmeübertrager als elektrische Heizeinrichtung 2 geleitet. Der Kältemittelverdampfer 18 dient zum Kühlen der durch die Kraftfahrzeugklimaanlage geleiteten Luft.

Die Kraftfahrzeugklimaanlage 1 ist somit nicht mit einem von Kühlmittel durchströmten Wärmeaustauscher versehen zum Erwärmen der durch die Kraftfahrzeugklimaanlage 1 geleiteten Luft. Die durch die Kraftfahrzeugklimaanlage 1 geleitete Luft wird ausschließlich mittels des Wärmeübertrager oder der elektrischen Heizeinrichtung 2 elektrisch erwärmt. Wellrippen 11 der elektrischen Heizeinrichtung 2 sind in Fig. 1 nicht dargestellt. Die Kraftfahrzeugklimaanlage 1 wird vorzugsweise in einem Kraftfahrzeug mit ausschließlich elektrischem Antrieb oder mit einem Hybridantrieb eingesetzt (nicht dargestellt). Um mittels der elektrischen Heizeinrichtung 2 die notwendige elektrische Heizleistung zu erreichen, muss die elektrische Heizeinrichtung 2 mit Hochspannung, z. B. mit mehr als 50 Volt, beispielsweise mit 60 V oder 300 V, betrieben werden, um keine zu großen Stromstärken und damit zu dicke Leitungen 19 zu erhalten.

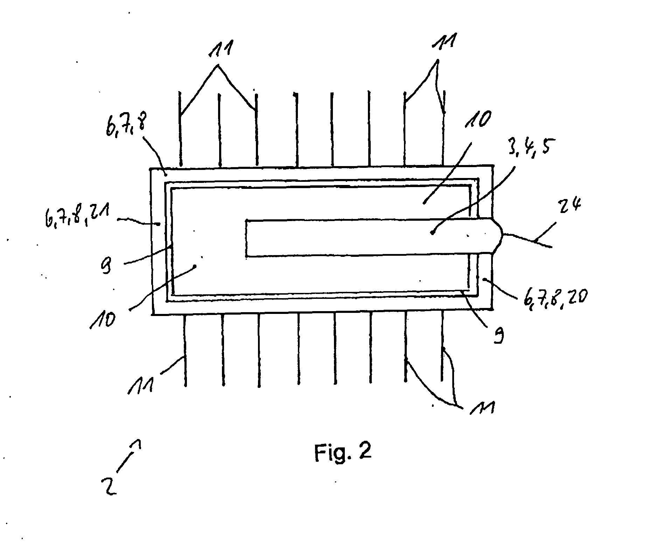

Die elektrische Heizeinrichtung 2 weist einen als Rohr 7 ausgebildeten Körper 6 auf, welcher einen Hohlraum 10 einschließt (Fig. 2). Das Rohr 7 besteht aus Wandungen 8. Die in Fig. 2 oben und unten dargestellten Wandungen 8 des Rohres 7 sind im Querschnitt z. B. kreis- oder rechteckförmig. Die in Fig. 2 links und rechts dargestellten beiden Wandungen 8, 20, 21 des Rohres 7 schließen somit die im Querschnitt z. B. kreis- oder rechteckförmigen Wandungen 8 des Rohres ab, so dass sich dadurch ein geschlossener Hohlraum 10 bildet. An der in Fig. 2 rechts dargestellten Wandung 8, 20 ist eine Ausnehmung oder eine Bohrung vorhanden, in der eine Vorrichtung 3 zur Erzeugung einer elektromagnetischen Strahlung angeordnet und befestigt ist. Die als Quarzrohr-Lampe 5 ausgebildete Lampe 4 als Vorrichtung 3 zur Erzeugung der elektromagnetischen Strahlung weist dabei im Bereich der rechten Wandung 8 des Rohres 7 ein Lampengehäuse auf, das elektrisch isolierend ist. Dadurch ist der Körper 6 gegenüber der Quarzrohr-Lampe 5 elektrisch isoliert (nicht dargestellt). Diese elektrische Isolierung der Quarzrohr-Lampe 5 gegenüber dem Rohr 7 ist einfach und problemlos herstellbar, weil durch diese elektrische Isolierung keine Wärme von der Quarzrohr-Lampe 5 zu dem Rohr 7 bzw. der rechten Wandung 8 des Rohres 7 geleitet werden muss. Die Quarzrohr-Lampe 5 wird mittels zweier elektrischer Leitungen 19 mit elektrischem Strom im Hochvoltbereich, z. B. im Bereich von 60 bis 300 Volt oder bis zu 600 V versorgt.

An der Außenseite des Rohres 7 sind mehrere Wellrippen 11. angeordnet. Die Wellrippen 11 dienen dazu, die außenseitige Oberfläche an dem Körper 6 zu vergrößern, um die an der elektrischen Heizeinrichtung 2 vorbeigeleitete Luft besser erwärmen zu können. Die Wellrippen 11 sind dabei mit dem Rohr 7 mittels Löten in einem Lötofen verbunden. An der Innenseite des Rohres 7, d. h. derjenigen Seite des Rohres 7, welche den Hohlraum 10 einschließt, ist eine Beschichtung 9 aufgebracht. Die aus Metall, z. B. Eisen oder Aluminium, bestehenden Wellrippen 11 sowie das Rohr 7 werden mittels Löten in einem Lötofen verbunden. Vor dem Einbringen des Rohres 7 und der Wellrippen 11 in den Lötofen wird innenseitig an dem Rohr 7 eine Blackbraze-Suspension aufgebracht und dadurch die Innenseite des Rohres 7 beschichtet. Während des Lötprozesses im Lötofen bildet sich aus der Beschichtung mit der Blackbraze-Suspension mit Hilfe des Nocolok-Lötverfahrens eine Beschichtung 9 als Blackbraze-Aluminiumoberfläche. Diese Blackbraze-Aluminiumoberfläche hat die Eigenschaft, dass die Beschichtung 9 in situ mit dem Rohr 7 verbunden ist, so dass dadurch nicht die Gefahr besteht, dass die Beschichtung 9 sich von dem Rohr 7 trennt.

Außerdem wird ein sehr hoher Anteil der von der Quarzrohr-Lampe 5 emittierten elektromagnetischen Strahlung von der Beschichtung 9 als Strahlungsabsorbierungsmittel absorbiert, so dass dadurch eine sehr schnelle Erwärmung des Rohres 7 und damit auch der Wellrippen 11 nach dem Einschalten der Quarzrohr-Lampe 5 eintritt. Die Beschichtung 9 als Blackbraze-Aluminiumoberfläche hat als nanoskalige anorganische schwarze Beschichtung außerdem den Vorteil, dass die Beschichtung 9 gegenüber elektromagnetischer Strahlung langzeitbesländig ist, so dass auch nach vielen Jahren der Benutzung der elektrischen Heizeinrichtung 2 weiterhin eine gute Absorbierung der von der Quarzrohr-Lampe 5 emittierten elektromagnetischen Strahlung durch die Beschichtung 9 gewährleistet ist.

Die von der Quarzrohr-Lampe 5 emittierte elektromagnetische Strahlung ist überwiegend Infrarotstrahlung mit einer Wellenlänge zwischen 780 nm und 1 mm. Vorzugsweise wird dabei überwiegend nahe Infrarotstrahlung mit einer Wellenlänge zwischen 780 nm bis 3000 nm emittiert. Die nahe Infrarotstrahlung hat dabei den Vorteil, dass diese eine besonders hohe Energiedichte aufweist, so dass dadurch auch bei nur kleinen geometrischen Abmessungen der elektrischen Heizeinrichtung 2, insbesondere des Hohlraumes 10 und der Oberfläche des Rohres 7 im Hohlraum 10, hohe elektrische Heizleistungen realisiert werden können. Die elektrische Heizleistung der elektrischen Heizeinrichtung 2 beträgt wenigstens 1000 Watt, vorzugsweise wenigstens 2000 oder 3000 Watt. Dadurch kann in einem Kraftfahrzeug innerhalb relativ kurzer Zeit der Fahrgastinnenraum schnell erwärmt werden.

Die von der Quarzrohr-Lampe 5 emittierte Infrarotstrahlung strahlt durch den Hohlraum 10 mit Luft und trifft auf der Beschichtung 9 auf. Die Beschichtung 9 absorbiert die Infrarotstrahlung und wandelt diese in Wärme um. Dadurch erwärmt sich die Beschichtung 9 und damit mittels Wärmeleitung auch das Rohr 7 mit den Wellrippen 11. Das Rohr 7 und die Wellrippen 11 können damit die an dem Rohr 7 und den Wellrippen 11 vorbeiströmende Luft, welche in den Fahrzeuginnenraum eingeleitet wird, erwärmen. Der Abstand zwischen der Beschichtung 9 als Bestandteil des Körpers 6 bzw. dem Körper 6 und der Quarzrohr-Lampe 5 im Bereich des Hohlraumes 10, d. h. außerhalb der rechten Wandung 20, beträgt wenigstens 0,1 mm, vorzugsweise wenigstens 1 cm.

In einem zweiten Ausführungsbeispiel, welches nicht dargestellt ist, weist die elektrische Heizeinrichtung 2 einen Körper 6, z. B. ein Rohr 7 auf, das einen Hohlraum 10 fluiddicht einschließt. Innerhalb des Hohlraumes 10 des Körpers 6, z. B. des Rohres 7, ist eine Flüssigkeit mit einer polaren Atombindung angeordnet. Es handelt sich dabei z. B. um Wasser oder Öl. Außerhalb des Körpers 7, z. B. des Rohres 7, ist dabei eine Einrichtung zur Erzeugung von Mikrowellen vorhanden. Diese Einrichtung zur Erzeugung von Mikrowellen kann z. B. auch außen an dem Gehäuse 13 der Kraftfahrzeugklimaanlage 1 angeordnet sein oder auch innerhalb des Kanales 22, in dem der Körper 6 angeordnet ist. Von der Einrichtung emittierten Mikrowellen erwärmen die Flüssigkeit in dem Hohlraum 10 des Körpers 6. Diese erwärmte Flüssigkeit erwärmt anschließend den Körper 6 und die Wellrippen 11, welche auf dem Körper 6 angeordnet sind. Die Wärme wird damit mittels Wärmeleistung von der Flüssigkeit auf den Körper 6 und darauffolgend auf die Wellrippen 11 übertragen. An dem Körper 6 und den Wellrippen 11 wird durch den Kanal 22 zu erwärmende Luft vorbeigeleitet, so dass sich diese in analoger Weise zu dem ersten Ausführungsbeispiel der elektrischen Heizeinrichtung 2 gemäß Fig. 2 erwärmt wird.

Insgesamt betrachtet sind mit der erfindungsgemäßen Kraftfahrzeugklimaanlage 1 und der erfindungsgemäßen Verfahren zum Erwärmen von Luft in einer Kraftfahrzeugklimaanlage wesentliche Vorteile verbunden. Die Wärmeenergie wird von einer Lampe 4 als Wärmestrahlung erzeugt. Die Lampe 4 ist innerhalb des Rohres 7 leicht elektrisch zu isolieren und die Wärmeübertragung erfolgt von der Lampe 4 mittels Wärmestrahlung auf das Rohr 7, so dass bei einer guten und schnellen Wärmeübertragung eine gute elektrische Isolierung einfach möglich ist.

### Bezugszeichenliste

- 1: Kraftfahrzeugklimaanlage
- 2: Elektrische Heizeinrichtung
- 3: Vorrichtung zur Erzeugung der elektromagnetischen Strahlung
- 4: Lampe
- 5: Quarzrohr-Lampe
- 6: Körper
- 7: Rohr
- 8: Wandung
- 9: Beschichtung
- 10: Hohlraum
- 11: Wellrippen
- 12: Gebläse
- 13: Gehäuse
- 14: Bodenwandung
- 15: Gehäusewandung
- 16: Austrittsabschnitt
- 17: Filter
- 18: Kältemittelverdampfer
- 19: Leitung
- 20: Rechte Wandung
- 21: Linke Wandung
- 22: Kanal
- 23: Oberfläche

## Patentansprüche

1. Kraftfahrzeugklimaanlage (1), umfassend
- ein Gehäuse (13),
- vorzugsweise ein Gebläse (12),
- einen Kältemittelverdampfer (18) zum Kühlen einer einem Fahrzeuginnenraum zuzuführenden Luft,
- eine elektrische Heizeinrichtung (2) zum Erwärmen der dem Fahrzeuginnenraum zuzuführenden Luft,
wobei die elektrische Heizeinrichtung (2) eine Vorrichtung (3) zur Emittierung einer elektromagnetischen Strahlung umfasst, die von der Vorrichtung (3) emittierte elektromagnetische Strahlung von einem Körper (6) und/oder einem Feststoff und/oder einer Flüssigkeit, absorbierbar ist und von dem mittels der elektromagnetischen Strahlung erwärmten Körper (6) und/oder .Feststoff und/oder Flüssigkeit die Luft mittelbar oder unmittelbar erwärmbar ist, **dadurch gekennzeichnet, dass** die Vorrichtung (3) eine Quarzrohr-Lampe (5), ist.

2. Kraftfahrzeugklimaanlage nach Anspruch 1, **dadurch gekennzeichnet, dass** wenigstens 10% oder 20%, vorzugsweise wenigstens 30% oder 50% oder 60%, insbesondere wenigstens 80% oder 90% oder 95% oder 99%, der von der Vorrichtung (3) zur Verfügung gestellte Wärmeenergie elektromagnetische Strahlung oder Wärmestrahlung ist.

3. Kraftfahrzeugklimaanlage nach Anspruch 1 oder 2, **dadurch gekennzeichnet, dass** der Körper (6) wenigstens eine Wandung (8) aufweist und die wenigstens eine Wandung (8) einen Hohlraum (10) einschließt.

4. Kraftfahrzeugklimaanlage nach einem oder mehreren der vorhergehenden Ansprüche, **dadurch gekennzeichnet, dass** der Körper (6) ein Rohr (7) mit der wenigstens einen Wandung (8) umfasst und das Rohr (7) den Hohlraum (10) einschließt.

5. Kraftfahrzeugklimaanlage nach Anspruch 3 oder 4, **dadurch gekennzeichnet, dass** die wenigstens eine Wandung (8) des Körpers (6) an einer zu dem Hohlraum (10) gerichteten Seite eine Beschichtung (9) zur Absorbierung der von der Vorrichtung (3) emittierten elektromagnetischen Strahlung aufweist, vorzugsweise wenigstens 50 % oder 80 %, insbesondere wenigstens 90 % oder 95 % oder 99 %, der elektromagnetischen Strahlung von der Beschichtung (9) aborbierbar sind.

6. Kraftfahrzeugklimaanlage nach Anspruch 5, **dadurch gekennzeichnet, dass** die Beschichtung (9) eine Metall-Sauerstoff-Verbindung, z. B. ein Metalloxid, und/oder ein Metall umfasst.

7. Kraftfahrzeugklimaanlage nach Anspruch 6, **dadurch gekennzeichnet, dass** das Metall ein Element aus der Titangruppe, insbesondere Titan, ist und/oder die Beschichtung eine Titan-Sauerstoff-Verbindung umfasst und/oder die Beschichtung Titanoxidnitrid und Titan umfasst.

8. Kraftfahrzeugklimaanlage nach einem oder mehreren der vorhergehenden Ansprüche, **dadurch gekennzeichnet, dass** von der Vorrichtung (3) elektromagnetische Strahlung, vorzugsweise wenigstens 10 % oder 70 %, insbesondere wenigstens 30 % oder 50 % oder 60 %, ganz insbesondere wenigstens 80 % oder 90 % oder 95 % oder 99 %, im Infrarotbereich erzeugbar ist.

9. Kraftfahrzeugklimaanlage nach einem oder mehreren der vorhergehenden Ansprüche, **dadurch gekennzeichnet, dass** an dem Körper (6) außenseitig Wellrippen (11) angeordnet sind, um die Wärme von den Wellrippen (11) auf die zu erwärmende Luft zu übertragen.

## Claims

1. Motor vehicle air conditioned (1), comprising
- a housing (13),
- preferably a fan (12),
- a refrigerant vaporizer (18) for cooling air to be supplies to a vehicle inferior,
- an electrical heating device (2) for heating the air to be supplied to the vehicle inferior,
the electrical heating device (2) comprising a device (3) for emitting electromagnetic radiation, the electromagnetic radiation remitted by the device (3) being absorbable by a body (6) and/or a solid and/or a liquid and the air being directly or indirectly heatable by the body (6) and/or solid and/or liquid which is heated by means of the electromagnetic radiation, **characterized in that** the device (3) is a quartz tube lamp (5).

2. Motor vehicle air conditioner according to Claim 1, **characterized in that** at least 10% or 20%, preferable at least 30% or 50% or 60%, in particular at least 80% or 90% or 95% or 99% of the thermal energy provides by the device (3) is electromagnetic radiation or thermal radiation.

3. Motor vehicle air conditioned according to Claim 1 or 2, **characterized in that** the body (6) has at least once wall (8) and the at least once wall (8) encloses a cavity (10).

4. Motor vehicle air conditioner according to once or more of the preceding claims, **characterized in that** the body (6) comprises a tube (7) having the at least one wall (8) and the tube (7) encloses the cavity (10).

5. Motor vehicle air conditioned according to Claim 3 or 4, **characterized in that** the at least one wall (8) of the body (6) has, on a side oriented toward the cavity (10), a coating (9) for absorbing the electromagnetic radiation emitted by the device (3), preferably at least 50% or 80%, in particular at least 90% or 95% or 99% of the electromagnetic radiation being absorbable by the coating (9).

6. Motor vehicle air conditioned according to Claim 5, **characterized in that** the coating (9) comprises a metal-oxygen compound, e.g., a metal oxide, and/or a mental.

7. Motor vehicle air conditioner according to Claim 6, **characterized in that** the metal is an element from the titanium group, in particular titanium, and/or the coating comprises a titanium-oxygen compound and/or the costing comprise titanium oxide nitride and titanium.

8. Motor vehicle air conditioner according to once or more of the preceding claims, **characterized in that**, of the electromagnetic radiation generated by the device (3), preferable at least 10% or 20%, in particular at least 30% or 50% or 60%, very particularly at least 80% or 90% or 95% or 99% can be in the infrared range.

9. Motor vehicle air conditioned according to one or more of the preceding claims, **characterized in that** corrugated ribs (11) are arranged on the outsize of the body (6), in order to transfer the heat from the corrugated ribs (11) to the air to be heated.

## Revendications

1. Système de climatisation (1) d'un véhicule automobile, comprenant
- un carter (13),
- de préférence, un pulseur (12),
- un évaporateur de fluide frigorigène (18) servant au refroidissement de l'air à fournir à l'habitacle d'un véhicule,
- un dispositif de chauffage électrique (2) servant au chauffage de l'air à fournir à l'habitacle d'un véhicule,
où le dispositif de chauffage électrique (2) comprend un dispositif (3) servant à l'émission d'un rayonnement électromagnétique, le rayonnement électromagnétique émis par le dispositif (3) prouvant être absorbé par un corps (6) et / ou par des matières soldes et / ou par un liquide, et l'air peut être chauffé indirectement ou directement par le corps (6) et / ou par les matières solide et / ou par le liquide chauffés par le rayonnement électromagnétique,
**caractérisé en ce que** le dispositif (3) est une lampe à tube à quartz (5).

2. Système de climatisation, d'un véhiculé automobile selon la revendication 1, **caractérisé en ce qu'**au moins 10 % ou 20 %, de préférence au moins 30 % ou 50 % ou 60 %, en particulier au moins 80 % ou 90 % ou 95 % ou 99 % de l'énergie thermique fournie par le dispositif (3) sont constitués par un rayonnement électromagnétique ou par un rayonnement thermique.

3. Système de climatisation d'un véhicule automobile selon la revendication 1 ou 2, **caractérisé en ce que** le corps (6) présenté au moins une paroi (8), et la paroi (8) au moins au nombre de un comprend un espace creux (10).

4. Système de climatisation d'un véhicule automobile selon l'une quelconque ou plusieurs des revendications précédentes, **caractérisé en ce que** le corps (6) comprend un tube (7) comportant au moins une paroi (8), et le tube (7) comprend l'espace creux (10).

5. Système de climatisation d'un véhiculé automobile selon la revendication 3 ou 4, **caractérisé en ce que** la paroi (8) - au moins au nombre de un - du corpus (6) présenté, sur un côté tourné vers l'espace creux (10), un revêtement (9) servant à l'absorption du rayonnement électromagnétique émis par le dispositif (3), de préférence au moins 50 % ou 80 %, en particulier au moins 90 % ou 95 % ou 99 % du rayonnement électromagnétique pouvant être absorbés par le revêtement (9).

6. Système de climatisation d'un véhiculé automobile selon la revendication 5, **caractérisé en ce que** le revêtement (9) comprend une combinaison d'oxygène avec un métal, par exemple un oxyde métallique et / ou un métal.

7. Système de climatisation d'un véhicule automobile selon la revendication 6, **caractérisé en ce que** le métal est un élément du groupe des titanes, en particulier du titane, et / ou le revêtement comprend une combinaison d'oxygène avec du titane, et / ou le revêtement comprend du nitrure d'oxyde de titane est du titane.

8. Système de climatisation d'un véhicule automobile selon l'une quelconque ou plusieurs des revendications précédentes, **caractérisé en ce que** de préférence au moins 10 % ou 20 %, en particulier au moins 30 % ou 50 % ou 60 %, tout particulièrement au moins 80 % ou 90 % ou 95 % ou 99 % du rayonnement électromagnétique émis par le dispositif (3) peuvent être produits dans la plage infrarouge.

9. Système de climatisation d'un véhiculé automobile selon l'une quelconque ou plusieurs des revendications précédentes, **caractérisé en ce que** des ailettes ondulées (11) sont disposées extérieurement sur le corpus (6), pour transmettre la chaleur provenant des ailettes ondulées (11), à l'air à chauffeur.
